Europäisches Patentamt

European Patent Office

Office européen des brevets

(19)

(11) **EP 0 792 187 B1**

(12) **FASCICULE DE BREVET EUROPEEN**

(45) Date de publication et mention
de la délivrance du brevet:
**03.04.2002 Bulletin 2002/14**

(21) Numéro de dépôt: **96931121.6**

(22) Date de dépôt: **13.09.1996**

(51) Int Cl.⁷: **B01D 53/92**, B01D 53/62

(86) Numéro de dépôt international:
**PCT/FR96/01411**

(87) Numéro de publication internationale:
**WO 97/10044 (20.03.1997 Gazette 1997/13)**

(54) **PROCEDE ET DISPOSITIFS D'EPURATION CHIMIQUE DES GAZ D'ECHAPPEMENT DES MOTEURS THERMIQUES.**

VERFAHREN UND VORRICHTUNGEN ZUM CHEMISCH REINIGEN VON ABGASEN FÜR BREMSKRAFTMASCHINEN

METHOD AND DEVICES FOR THE CHEMICAL PURIFICATION OF THERMAL ENGINE EXHAUST GASES

(84) Etats contractants désignés:
**AT BE CH DE ES GB GR IT LI LU NL SE**

(30) Priorité: **14.09.1995 FR 9510755**

(43) Date de publication de la demande:
**03.09.1997 Bulletin 1997/36**

(73) Titulaire: **Grumbach, Marc**
**78230 Le Pecq (FR)**

(72) Inventeur: **Grumbach, Marc**
**78230 Le Pecq (FR)**

(74) Mandataire: **Lejet, Christian**
**Cabinet C. Lejet,**
**69, rue Victor Hugo**
**92400 Courbevoie (FR)**

(56) Documents cités:
**DE-A- 2 061 858 FR-A- 2 075 103**
**US-A- 3 793 807**

**Description**

La présente invention concerne les gaz d'échappement des moteurs thermiques équipant notamment les véhicules et, plus particulièrement, un procédé et des dispositifs d'épuration de ces gaz mettant en oeuvre une fixation du dioxyde de carbone par des réactifs chimiques.

On sait que la lutte contre la pollution dans les villes par les gaz d'échappement est devenu un problème majeur. Les solutions proposées actuellement ne sont pas satisfaisantes en terme de $CO_2$ qui reste l'une des principales sources de pollution. Or, les gaz d'échappement des moteurs thermiques des véhicules comprennent essentiellement jusqu'à 15 % en volume environ de $CO_2$, 10 % en volume environ d'oxygène, 10 % en volume environ de vapeur d'eau, 63 % en volume environ d'azote -qui est un produit neutre en matière de pollution-, le reste étant constitué d'un très faible pourcentage d'oxydes d'azote, d'hydrocarbures, de monoxyde de carbone, d'oxyde de soufre, etc... Ces gaz comprennent aussi quelques dizaines de $mg/m^3$ d'impuretés solides. Il faut noter qu'il y a environ 60 fois moins de monoxyde de carbone en volume que de dioxyde de carbone dans un gaz d'échappement et que, de plus, les pots d'échappement catalytiques transforment par oxydation le CO en $CO_2$, ce qui augmente d'autant le volume de $CO_2$ à la sortie des pots d'échappement.

Or, on sait que le $CO_2$, bien que non toxique, participe à l'effet de serre local dans les grandes villes du type Paris, Athènes ou Los Angelès du fait de sa forte densité.

Il existe, pour le transport urbain, des solutions alternatives évitant l'émission de $CO_2$, telles que les véhicules à moteur électrique, mais ceux-ci ne sont pas convainquant du fait que leurs performances sont très limitées, surtout en matière d'autonomie et de poids, et de leur coût très élevé.

La présente invention a pour but d'épurer les gaz d'échappement des véhicules à moteur thermique, de manière à conserver sensiblement tous les avantages d'un tel moteur, tout en éliminant les émissions polluantes.

Diverses tentatives ont été effectuées dans ce domaine. Parmi d'autres, le document DE-A-20 61 858 relate la fixation du monoxyde de carbone et le document US-A-3 793 807 concerne la fixation par sédimentation des impuretés solides telles que le plomb.

Le document FR-A-2 075 103, pour sa part, décrit un simple filtre avec un passage direct des gaz réalisé au moyen d'une cartouche amovible contenant de la chaux sodée et du charbon activé et disposée dans le pot d'échappement usuel. Or, on sait que le charbon activé est sans effet sur le $CO_2$, et que la quantité requise de chaux pour fixer le $CO_2$ est nettement supérieure à ce qui pourrait être mis dans un pot d'échappement.

Aucun de ces enseignements ne peut donc être mis en oeuvre pour épurer valablement en $CO_2$ les gaz d'échappement des moteurs thermiques.

L'invention concerne donc un procédé et un dispositif d'épuration des gaz d'échappement d'un véhicule à moteur thermique, consistant à fixer chimiquement le dioxyde de carbone des gaz d'échappement par réaction avec un réactif choisi parmi la potasse, la soude, la chaux et les produits dérivés de celles-ci

Selon l'invention, on fait passer les gaz d'échappement issus du moteur dans un réacteur constitué d'un lit fluidisé ou liquide contenant le réactif précité, les gaz issus du réacteur étant soit retournés vers le réacteur pour améliorer le rendement de la réaction, soit envoyés vers un conduit d'évacuation de ceux-ci.

Selon un premier mode préféré de réalisation, les gaz d'échappement sont préalablement passés dans un condenseur pour l'élimination de l'eau qu'ils contiennent, le réacteur étant constitué d'un lit fluidisé.

Selon un autre mode de réalisation, lorsque le réacteur comporte un réactif sous forme liquide, le liquide issu du réacteur est décanté avant d'être retourné vers le réacteur.

L'invention sera mieux comprise, et d'autres buts, avantages et caractéristiques de celle-ci apparaîtront plus clairement à la lecture de la description qui suit de modes préférés de réalisation donnés à titre non limitatif et à laquelle une planche de dessins est annexée sur laquelle :

La Figure 1 représente schématiquement un dispositif d'épuration des gaz selon un premier mode de réalisation conforme à l'invention ; et
La Figure 2 représente schématique un autre mode de réalisation conforme à l'invention.

Pour éliminer la plus grande partie du $CO_2$ des gaz d'échappement, il est souhaitable d'ajouter sur les véhicules à moteur à essence ou à gazole un dispositif d'épuration chimique des gaz d'échappement des moteurs thermiques qui utilise un réactif de fixation choisi parmi la potasse, la soude, la chaux, et les produits dérivés de celles-ci et disposé dans un réacteur approprié.

On connait les réactions chimiques suivantes :

Avec la soude :

$$CO_2 + 2\,NaOH \rightarrow CO_3Na_2 + H_2O$$

$$CO_2 + NaOH \rightarrow CO_3NaH$$

Avec la chaux :

$$CO_2 + CaO \rightarrow CO_3Ca$$

$$CO_2 + Ca(OH)_2 + 5H_2O \rightarrow CO_3Ca(6H_2O)$$

L'inconvénient majeur d'un tel dispositif chimique est évidemment son poids, mais celui-ci peut être modulé comme le montrent les exemples qui seront donnés plus loin.

A titre d'exemple, voici l'ordre de grandeur des surpoids nécessaires pour un véhicule de type familial consommant environ 8 l de carburant pour 100 km parcourus, en prenant pour hypothèses que :

- le contenu d'un réservoir d'un carburant classique est de 60 litres, ce qui correspond à 45 kg de carburant ;
- avec un carburant d'une composition proche de $CH_{1,75}$ ou de $CH_{1,80}$, il y comprend environ 42 kg de carbone ;
- après combustion complète du carburant, on trouve au maximum environ 150 kg de $CO_2$.

Pour neutraliser le $CO_2$, il faut donc environ entre 140 et 290 kg de soude pure ou environ 210 kg de CaO. L'ordre de grandeur du surpoids en fin de parcours est donc compris entre 320 kg ou de 470 kg environ respectivement.

En réduisant l'autonomie du véhicule à 100 km, comme celle des véhicules à moteur électrique présentant un surpoids de l'ordre de 230 kg, le surpoids engendré par le dispositif selon l'invention est de l'ordre de 150 kg, ce qui reste tout à fait acceptable pour obtenir un véhicule tout à fait propre.

Pour un autobus consommant de l'ordre de 50 litres de carburant pour 100 km parcours, le surpoids est de l'ordre de 1200 Kg pour une autonomie de l'ordre de 200 km, tandis que, pour un autobus à moteur électrique d'une autonomie de 100 km, le surpoids du aux batteries est au moins de l'ordre de 2700 à 3000 kg.

L'avantage du procédé réside dans la souplesse des choix possibles :

- conserver l'autonomie des moteurs thermiques ou la réduire avec un surpoids réduit ;
- avoir la possibilité d'un fonctionnement mixte : épuration des gaz en ville et marche normale à la campagne ;
- suppression complète ou partielle de l'émission de $CO_2$ suivant les réglementations en vigueur ;
- remplacement du conteneur de réactif lors du plein de carburant (échange standard) ou vidange d'un produit à peu près inerte ;
- les produits de réaction sont des carbonates qui peuvent être régénérés ou stockés suivant les conditions économiques et les systèmes de taxation ;
- les autres impuretés ($NO_x$, $SO_x$...) sont fixées en même temps.

La mise en oeuvre du procédé selon l'invention peut s'effectuer selon différents modes :

- passage des gaz dans un réacteur en phase liquide contenant le réactif en forme de solution ou de suspension ; ou
- passage des gaz dans un condenseur pour l'élimination de l'eau, puis dans un réacteur à lit fluidisé fixant le $CO_2$.

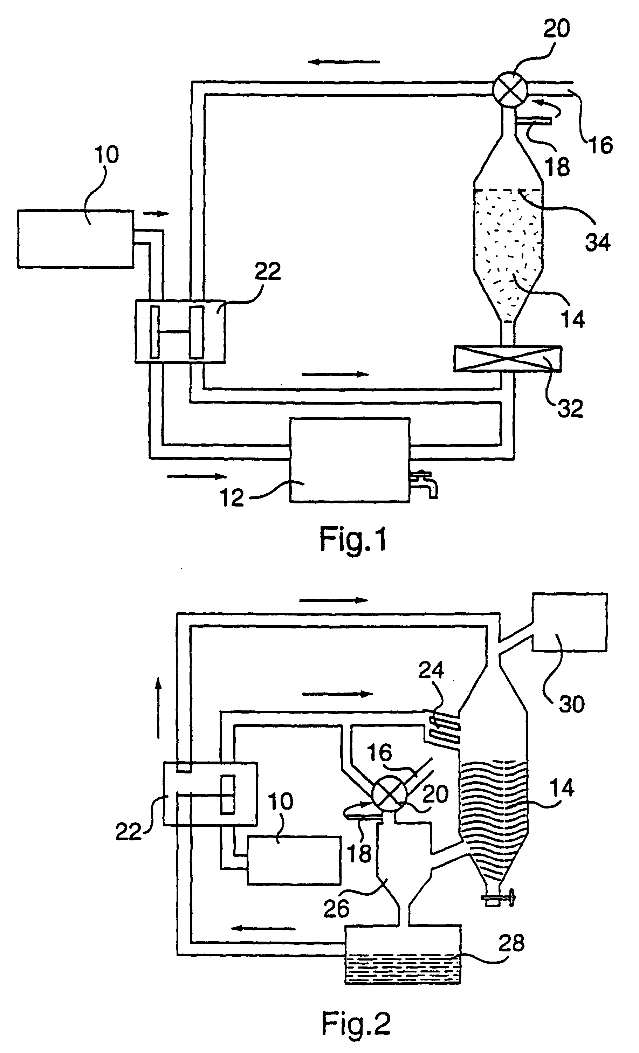

En référence maintenant à la Figure 1, on a représenté schématiquement un dispositif selon un premier mode de réalisation préféré de l'invention. Les gaz d'échappement issus du moteur thermique 10 sont d'abord envoyés à un condenseur 12 pour éliminer le maximum de l'eau qu'ils contiennent. La sortie du condenseur 12 est reliée à l'entrée d'un réacteur 14 à lit fluidisé de telle manière que les gaz traversent l'ensemble du réactif choisi sous forme solide en poudre (de bas en haut sur la Figure). Les gaz issus du réacteur 14 peuvent soit être renvoyés vers l'entrée du réacteur 14 pour améliorer le rendement de la réaction, soit être expulsés vers un conduit de sortie 16. Un dispositif 18 analyse les gaz à la sortie du réacteur 14 et commande une vanne 20 commandant soit la re-circulation des gaz, soit leur échappement en fonction de l'épuration obtenue.

Pour favoriser la circulation des gaz dans l'ensemble et, plus particulièrement, dans le réacteur 14, il est utile de prévoir un moyen de pompage destiné à augmenter la pression des gaz. Un tel moyen peut être réalisé avec une pompe de type électrique, mais, de préférence, il est constitué par un turbocompresseur 22 commandé directement par les gaz d'échappement eux-même à la sortie du moteur thermique. A titre d'exemple, une pression de l'ordre de 0,2 à 0,3 MPa est souhaitable. La réaction chimique est alors modulée en fonction du régime du moteur, puisque l'on sait que les gaz d'échappement contiennent beaucoup moins de $CO_2$ au ralenti du moteur qu'à la puissance maximale de ce dernier. Une pompe électrique d'appoint au ralenti peut cependant être favorablement prévue.

Un deuxième mode préféré de réalisation est représenté schématiquement sur la Figure 2. Le réacteur 14 comprend ici un réactif sous forme liquide, par exemple un lait de chaux. Les gaz d'échappement issus du moteur thermique 10 sont envoyés sous pression au réacteur 14 par l'intermédiaire d'injecteurs 24. Ici, bien sûr, les gaz sont expédiés de haut en bas sur la Figure, pour assurer une meilleure réaction chimique.

La sortie du réacteur 14 est reliée à un cyclone 26 dans lequel sont automatiquement séparés les gaz épurés à rejeter vers l'extérieur par le conduit d'échappement 16 et le liquide à faire recirculer dans le réacteur 14. Les solides sont séparés par effet centrifuge dans le cyclone 26 en amont du décanteur 28 permettant d'en éliminer les impuretés solides du liquide.

On prévoit un moyen de pompage 22, telle une turbo-pompe, pour assurer la circulation du liquide dans le dispositif. Il reste, en effet, nécessaire de bien agiter le mélange gaz-réactif dans le réacteur de manière à optimiser la réaction chimique.

De façon favorable, une réserve 30 de réactif sera prévue en conjonction avec le réacteur 14 pour amener un réactif neuf vers le réacteur 14 pendant l'utilisation.

On constate que l'invention apporte une solution efficace à l'épuration des gaz d'échappement pour une diminution sensible de l'effet de serre sur les grandes villes. Si l'invention est déjà mise en oeuvre sur les seuls véhicules les plus polluants en milieu urbain, tels les véhicules lourds, les bus, camions de livraison ou de ramassage d'ordures, et équivalents, l'effet de serre peut être très nettement réduit. De tels véhicule vont normalement à un dépôt chaque soir où il est facile de collecter le carbonate obtenu et de recharger le réactif nécessaire.

A noter également que le carbonate obtenu lors de la réaction, carbonate qui ne présente aucune nocivité, peut être utilement recyclé pour d'autres utilisations, ou re-traité, ou même incinéré avec des ordures ménagères.

Bien que l'on ait représenté et décrit ce que l'on considère actuellement être les modes de réalisation préférés de la présente invention, il est évident que l'Homme de l'Art pourra y apporter différents changements et modifications sans sortir du cadre de la présente invention tel que défini par les revendications jointes.

Par exemple, on pourra prévoir un moyen pour déconnecter, automatiquement ou non, le dispositif selon l'invention, lorsque le véhicule ainsi équipé se trouvera hors d'une ville, en site rural, là où l'élimination du $CO_2$ n'est pas nécessaire en soi et ne se justifie nullement.

On pourra également prévoir, notamment dans le mode de réalisation représenté Figure 1, un moyen de chauffage des gaz devant pénétrer dans le réacteur 14. En effet, une température plus élevée permet d'obtenir des réactions chimiques plus rapides et plus complètes. Ainsi, un échangeur de chaleur 32 pourra être disposé à l'entrée du réacteur 14 pour réchauffer les gaz traités au moyen des gaz d'échappement directement issus du moteur 10. Ceci présente l'avantage complémentaire de refroidir ces mêmes gaz à leur entrée dans le condenseur 12, ce qui améliore la condensation.

On pourra également prévoir de façon favorable un filtre 34 disposé à la sortie du réacteur 14 pour éviter que les gaz de sortie emporte une partie de la poudre du lit fluidisé.

On pourra également prévoir la mise en série de plusieurs réacteurs ou de plusieurs boucles de réaction.

**Revendications**

1. Procédé d'épuration des gaz d'échappement d'un véhicule à moteur thermique (10), consistant à fixer chimiquement lé dioxyde de carbone des dits gaz d'échappement par réaction avec un réactif choisi parmi la potasse, la soude, la chaux et les produits dérivés de celles-ci,
   **caractérisé en ce que**
   l'on fait passer les gaz d'échappement issus du dit moteur (10) dans un réacteur (14) constitué d'un lit fluidisé ou liquide contenant le dit réactéur, les gaz issus du dit réacteur (14) étant soit retournés vers le dit réacteur (14) pour améliorer le rendement de la réaction, soit envoyés vers un conduit d'évacuation de ceux-ci (16).

2. Procédé selon la revendication 1, **caractérisé en ce que** les dits gaz d'échappement sont préalablement passés dans un condenseur (12) pour l'élimination de l'eau qu'ils contiennent, le réacteur (14) étant constitué d'un lit fluidisé.

3. Procédé selon la revendication 2, **caractérisé en ce que** les gaz sont réchauffés avant d'entrer dans le dit réacteur (14).

4. Procédé selon l'une quelconque des revendications précédente, **caractérisé en ce que** l'on élève la pression des gaz introduits dans le dit réacteur (14).

5. Dispositif pour la mise en oeuvre du procédé selon la revendication 1, 3 ou 4, **caractérisé en ce qu'**il comprend un condenseur (12) disposé à la sortie des gaz d'échappement du dit moteur (10) et un réacteur (14) constitué d'un lit fluidisé disposé à la sortie du dit condenseur (12).

6. Dispositif selon la revendication 5, **caractérisé en ce que** la sortie du dit réacteur (14) est pourvu d'une vanne (20) dirigeant les gaz issus du dit réacteur (14) soit vers un conduit d'évacuation des gaz épurés (16), soit à nouveau vers l'entrée du dit réacteur (14).

7. Dispositif pour la mise en oeuvre du procédé selon la revendication 1, **caractérisé en ce que** le dit réacteur (14) travaille en phase liquide et a sa sortie connectée à un décanteur (28) relié à l'entrée du dit réacteur (14).

8. Dispositif pour la mise en oeuvre du procédé selon la revendication 4 et selon l'une quelconque des revendications 5 à 7, **caractérisé en ce qu'**il comprend un moyen de pompage (22) des dits gaz favorisant une re-circulation des dits gaz issus du dit réacteur (14) vers ce dernier.

**9.** Dispositif selon la revendications 8, **caractérisé en ce que** le dit moyen de pompage (22) est un turbocompresseur ou une turbopompe actionné par les gaz issus directement du dit moteur (10).

**Patentansprüche**

**1.** Verfahren zur Reinigung der Abgase eines mit einem Verbrennungsmotor (10) versehenen Kraftfahrzeuges, bestehend aus einer chemischen Bindung des Kohlendioxids der Abgase durch Reaktion mit einem Reagens, das ausgewählt ist aus Pottasche, Soda, Kalk und aus diese enthaltenden Verbindungen,
dadurch gekennzeichnet, dass die vom Motor (10) stanunenden Abgase in einen Reaktor (14) eingeleitet werden, der ein fluidisiertes oder flüssiges Bett aus diesem Reagens enthält, wonach die aus diesem Reaktor (14) austretenden Gase entweder dem Reaktor (14) zur Erhöhung des Wirkungsgrades der Reaktion erneut zugeführt werden oder einer Abfuhrleitung (16) für die Abgase zugeführt werden.

**2.** Verfahren nach Anspruch 1, **dadurch gekennzeichnet, dass** die Abgase vorab einem Kondensator (12) zugeführt werden zur Abscheidung des in ihnen enthaltenen Wassers, wobei der Reaktor (14) ein fluidisiertes Bett enthält.

**3.** Verfabren nach Anspruch 2, **dadurch gekennzeichnet, dass** die Gasc vor dem Eintritt in den Reaktor (14) erneut aufgeheizt werden.

**4.** Verfahren nach einem der vorhergehenden Ansprüche, **dadurch gekennzeichnet, dass** der Druck der in den Reaktor (14) eingeleiteten Gase erhöht wird.

**5.** Vorrichtung zur Durchführung des Verfahrens nach Ansprüchen 1, 3 oder 4, **dadurch gekennzeichnet, dass** sie einen Kondensator (12) aufweist, der am Auslass der Abgase aus dem Motor (10) angeordnet ist, sowie einen Reaktor (14) aufweist, der ein fluidisiertes Bett enthält und der am Auslass des Kondensators (12) angeordnet ist.

**6.** Vorrichtung nach Anspruch 5, **dadurch gekennzeichnet, dass** am Auslass des Reaktors (14) ein Ventil (20) vorgesehen ist, das die aus dem Reaktor (14) austretenden Gase entweder einer Abfuhrleitung (16) für die gereinigten Gase zuführt oder dem Einlass des Reaktors (14) erneut zuführt.

**7.** Vorrichtung zur Durchführung des Verfahrens nach Anspruch 1, **dadurch gekennzeichnet, dass** der Reaktor (14) mit einer flüssigen Phase arbeitet und dass sein Auslass mit einem Abscheider (28) verbunden ist, der mit dem Einlass des Reaktors (14) in Verbindung steht.

**8.** Vorrichtung zur Durchführung des Verfahrens nach Anspruch 4 und einem der Ansprüche 5 bis 7, **dadurch gekennzeichnet, dass** sie eine Pumpanordnung (22) für die Gase aufweist zur Ermöglichung der einer Rezirkulation der aus dem Reaktor (19) austretenden Gase zu ihm hin.

**9.** Vorrichtung nach Anspruch 8, **dadurch gekennzeichnet, dass** die Pumpanordnung (22) ein Turbokompressor oder eine Turbopumpe ist, der bzw. die durch direkt aus dem Motor (10) austretende Gase antreibbar ist.

**Claims**

**1.** Method for purification of the exhaust gas from vehicle thermal engine (10), consisting in chemical fixing the carbon dioxide of said exhaust gas by reacting with a reactant chosen among potash, soda, lime and derived products from these last,
**characterized in that**
exhaust gas issuing out from said engine (10) go through a reactor (14) which is constituted with a fluidised or liquid bed enclosing said reactant, the gas issued out from the reactor (14) either coming back to said reactor (14) in order to improve the reaction yield, or taking out to an exhaust pipe (16) of the gas.

**2.** Method according to claim 1, **characterized in that** said exhaust gas are first passed through a condensor (12) in order to eliminate the self-containing water, the reactor (14) being a fluidised bed.

**3.** Method according to claim 2, **characterized in that** the gas are heated before entering in said reactor (14).

**4.** Method according to anyone of the preceding claims, **characterized in that** the pressure of the gas which are introduced into said reactor (14) is increased.

**5.** Device for setting the method according to claim 1, 3 or 4, **characterized in that** it includes a condensor (12) located at the output of the exhaust gas from said engine (10), and a reactor (14) comprised of a fluidised bed located at the output of said condensor (12).

**6.** Device according to claim 5, **characterized in that** the output of said reactor (14) is provided with a valve (20) driving the gas issued from said reactor (14) either to an exhaust cleaned gas pipe (16), or again to the input of said reactor (14).

7. Device for setting the method according to claim 1, **characterized in that** said reactor (14) operates in liquid phase and **in that** its output is connected to a decantor (28) coupled to the input of said reactor (14).

8. Device for setting the method according to claim 4 and according to anyone of claims 5 to 7, **characterized in that** it includes pumping means (22) for said gas, helping for recirculating said gas issued out from said reactor (14) back to it.

9. Device according to claim 8, **characterized in that** said pumping means (22) is a turbo-compressor or a turbo-pump driven by the exhaust gas directly issued from said engine (10).

Fig.1

Fig.2